(19) **Europäisches Patentamt**

**European Patent Office**

**Office européen des brevets**

(11) **EP 1 627 239 B1**

(12) **EUROPEAN PATENT SPECIFICATION**

(45) Date of publication and mention
of the grant of the patent:
**04.10.2006 Bulletin 2006/40**

(51) Int Cl.:
***G01T 1/20*** (2006.01)

(21) Application number: **04734552.5**

(22) Date of filing: **24.05.2004**

(86) International application number:
**PCT/GB2004/002229**

(87) International publication number:
**WO 2004/104634 (02.12.2004 Gazette 2004/49)**

(54) **A DETECTOR MODULE FOR DETECTING IONIZING RADIATION**

DETEKTORMODUL ZUR ERFASSUNG VON IONISIERENDER STRAHLUNG

MODULE DE DETECTION DESTINE A DETECTER UN RAYONNEMENT IONISANT

(84) Designated Contracting States:
**AT BE BG CH CY CZ DE DK EE ES FI FR GB GR
HU IE IT LI LU MC NL PL PT RO SE SI SK TR**

(30) Priority: **22.05.2003 GB 0311881**

(43) Date of publication of application:
**22.02.2006 Bulletin 2006/08**

(73) Proprietor: **ABERDEEN UNIVERSITY
Aberdeen AB24 3FX (GB)**

(72) Inventors:
• **McCallum, S.,
John Mallard Scottish PET Centre
Univ. of Aberdeen,
Aberdeen AB25 2ZD (GB)**
• **Clowes, Peter,
John Mallard Scottish PET Centre
Univ. of Aberdeen,
Aberdeen AB25 2ZD (GB)**
• **Welch, Andrew
John Mallard Scottish PET Centre
Univ. of Aberdeen,
Aberdeen AB25 2ZD (GB)**

(74) Representative: **Ablett, Graham Keith et al
Ablett & Stebbing,
Caparo House,
101-103 Baker Street
London W1M 1FD (GB)**

(56) References cited:
**WO-A-02/16965          US-A- 4 709 382
US-A- 5 138 167          US-A- 5 570 403
US-A1- 2002 153 492**

• **PATENT ABSTRACTS OF JAPAN vol. 009, no. 269
(P-400), 26 October 1985 (1985-10-26) -& JP 60
115886 A (TOSHIBA KK), 22 June 1985
(1985-06-22)**

**Description**

The present invention relates to a detector module for detecting ionizing radiation, and in particular to a computer tomography scanner utilizing a plurality of such detector modules. The term "ionising radiation" is used herein in its general sense, with the intention of encompassing all forms of such radiation, including x-rays, gamma ray radiation, alpha radiation and beta radiation.

The invention finds special, though not exclusive, application in the field of medical imaging. In that field, sophisticated imaging techniques utilising ionising radiation tend to be based upon:-

(a) the procedure of introducing a source of, or a trigger for the generation of, the ionising radiation into a body under examination, and observing its distribution within the body by detecting the radiation emergent from a selected region thereof, and/or

(b) the procedure of projecting ionising radiation through a body under examination from several directions and detecting the emergent radiation.

An example of the former technique is that known as positron emission tomography (PET), in which a small quantity of a radio pharmaceutical medium is injected into the body of a patient under examination, and its distribution mapped, using a scanner, and imaged. The radio pharmaceutical medium is designed to target certain tissues, blood or a physiological process, and to emit positrons which travel only short distances within the body before annihilation with local electrons resulting, in each instance, in the emission of gamma radiation in two directly opposed directions. The desired clinical information is provided by the detection of this gamma radiation and subsequent processing to develop an image of the distribution of annihilation sites within the body.

An example of the second of the basic examination techniques mentioned above, involves the projection of x-rays through the body, which is known as computerized tomography (CT).

In each of the above-mentioned techniques, efficient and accurate detection of ionising radiation emergent from the body is central to the activity, and much effort has been expended over many years in the pursuit of detectors which are efficient, sensitive, robust, reliable and economic to produce, bearing in mind that many hundreds (or even thousands) of detectors can be required in imaging systems such as PET and CT; similar detectors are disclosed in the article "Design of high-resolution and high-sensitivity scintillation crystal array for PET with nearly complete light collection", C.S. Levin, IEEE Transactions on Nuclear Science, vol. 49, nr. 5, October 2002.

It is an object of this invention to provide an improved detector module for the detection of ionising radiation especially, though not exclusively for use in the context of medical imaging.

According to the invention there is provided a detector module according to claim 1.

Preferably, the module has three or more detection layers.

In one embodiment, the thickness of scintillator used in at least two of the detection layers differs.

In another embodiment, the scintillators all have a common thickness.

It is preferred that the thickness of the scintillators becomes progressively larger with increasing distance from a front face of the module.

In a particular embodiment, the scintillators of the plurality of layers have a thickness selected to have substantially an equal probability of interaction with said ionizing radiation.

In another particular embodiment, the scintillator of at least one detection layer comprises a continuous crystal.

Conveniently, the scintillator of each said detection layer comprises a continuous crystal.

It is preferred that the scintillator of each detection layer has an area dimension and the thickness of the scintillator is less than the maximum dimension of the area dimension.

At least one detection layer may include a scintillator for detecting Beta particles including positrons, and/or at least one detection layer may include a scintillator for detecting alpha particles, and/or at least one detection layer may include a scintillator for detecting x-rays.

In one embodiment, the light sensitive solid state substrate element comprises a part of a larger solid state array for a plurality of detector modules.

The present invention also encompasses a computer tomography scanner including a plurality of detector modules as herein above defined. In this case, the scanner may be combined with a CT system or a SPECT system.

The present detector module is advantageous over conventional PMT based detectors for the following reasons: -

(A) Improved light collection efficiency, since the use of layers of scintillator material (typically crystalline material such as LYSO, BGO or LSO) that are relatively shallow, or thin, in the direction traveled by the radiation to be detected thereby ensures that gamma ray interactions always take place close to the semiconductive device associated therewith and used as a light detector. The solid angle made between the detection window and the interaction site is thus maximized. Moreover, the number of reflections and the average photon path length are reduced. The surface area of the scintillator window becomes a significant proportion of the total surface area of the scintillator, greatly improving light collection efficiency as compared with that of conventional detectors.

(B) The power of the detector stacks to stop the ionizing radiation is no longer dependent upon usage of high-density scintillation devices, as the detector's stopping power can be increased by using additional layers without any loss of resolution. Such flexibility allows a greater range of scintillation materials to be considered; this being particularly important, in terms of economy, for PET systems and the like which can contain several thousand detectors.

(C) Gamma ray interactions are most likely to occur in only one layer at any one time, leaving the remainder of the detector active and ready to detect other events. This considerably decreases detector dead-time.

(D) The multilayered detector can use shallow scintillator devices, hence the solid angle made between an interaction site and the scintillator's exit window will be relatively large and will show limited variation. A large proportion of the scintillation photons will hit the window directly without reflection. The use of shallow (thin) detector devices also leads to reduced self absorption. Thus, with shallow (thin) scintillator devices, it is no longer necessary to pixellate to localize the interaction site, and the surface finish applied to the sides of the scintillator devices is not as critical as it is with a single, deep layer design. It is thus easier and cheaper (compared to other more conventional apparatus) to manufacture the appropriate scintillator devices.

(E) A layered detector has an inherent depth of interaction capability. The depth resolution of the multi-layered detector depends on the thickness(es) of the scintillator device layers.

(F) Unlike photomultiplier tubes (PMTs), semi-conductor devices are not affected by magnetic fields and do not require shielding. Using APD-based detectors simplifies the task of designing and developing combined MRI and PET scanners.

The invention aims to address at least one of the problems posed by the bulk and expense of such prior detection arrangements and/or to improve the discriminatory characteristics of apparatus for detecting ionizing radiation.

In order that the invention may be clearly understood and readily carried into effect, embodiments thereof will now be described, by way of example only, with reference to the accompanying drawings, of which:-

Figure 1 shows an oblique view of a detection layer of the present invention;
Figure 2 shows a side view of a detector module of a first embodiment of the present invention;
Figure 3 shows a side view of a detector module of a second embodiment of the present invention;
Figure 4 shows a two-layer device and shows expressions for calculating the number interactions in the two layers;
Figure 5 illustrates an SBP calibration grid and 10 test interaction points;
Figure 6 shows a typical layout of electronic components for one detection layer; and
Figure 7 shows a modular electronics layout for an entire four-layered detector channel.

As mentioned above, positron emission tomography is a unique form of computed tomography in which positrons are emitted and the distribution of the compound is mapped using a scanner. The positrons can be considered as positive electrons which, when emitted from a nucleus, quickly loses momentum and annihilate with a near-by electron giving off two gamma rays at 180 degrees to each other. The energy of each of the two gamma rays is 511keV. The scanner detects the positions of these positron electron annihilations.

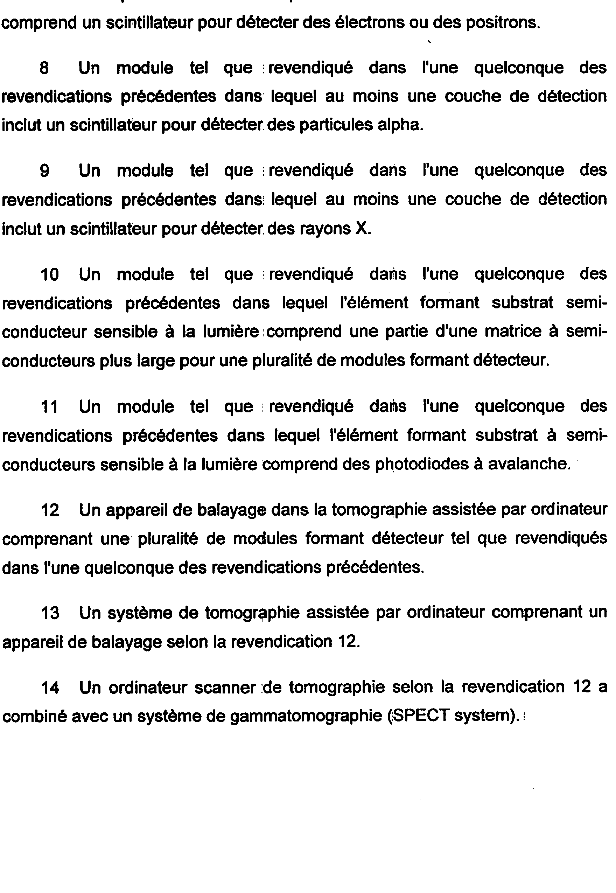

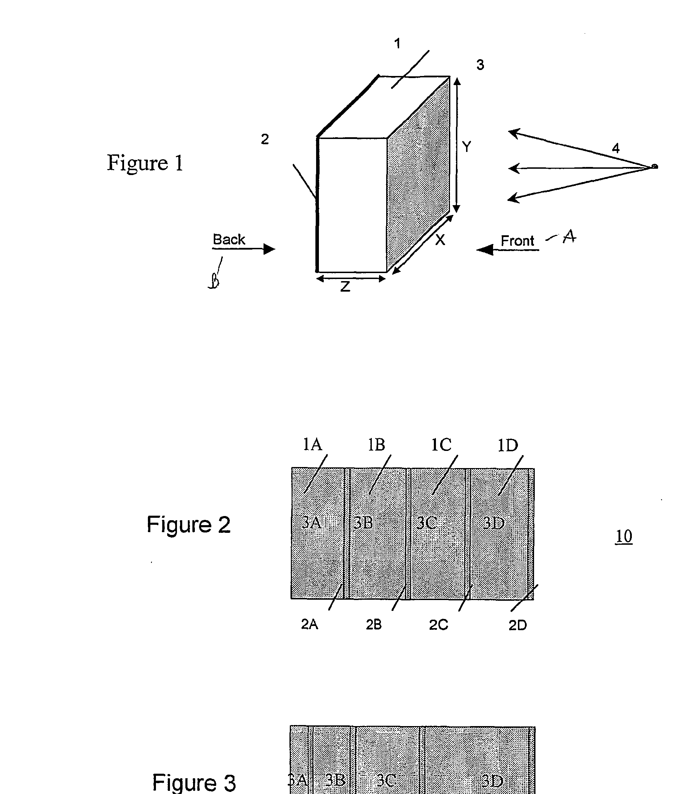

Referring to figure 1 there is shown a detection layer of a detector module (shown in figure 2) used in a positron emission tomographic scanner embodying the present invention. Typically, such scanners have a large number of these detector modules arranged in a ring configuration to surround a patient or sample.

Referring to figure 1, a single detection layer 3 of a detector module 10 of the present invention is shown. A scintillator 1, typically a scintillation material or a crystal as in this embodiment, has dimensions X and Y which define the surface area thereof, i.e. the plane facing a source 4 of radiation. The dimension Z refers to the third dimension of the crystal i.e. the thickness. The front of the detection layer is the end facing the radiation source 4 whilst the back is where a light sensitive solid state or semiconductor substrate 2 is attached. The purpose of the scintillation crystal is to convert the 511 keV gamma rays into a measurable pulse of light, at or near the optical wavelengths and the purpose of the light sensitive substrate 2 is to convert the pulse of scintillation light into an electrical charge.

There are a large variety of scintillation crystals and the crystal used is selected according to certain criteria such as:- high detection efficiency (typically by being dense) so that a high proportion of the 511 keV gamma rays entering the crystal are absorbed, high Z so a high percentage of interactions are photo-electric, high light output since the interaction of each gamma ray causes a large visible light pulse, a fast rise and fall time in that the gamma ray interaction and the light pulse takes a finite time to build up to its maximum value and then decay, the crystal should not significantly attenuate the scintillation light, and the crystal should be cheap available and convenient to use.

In the prior art, bismuth germinate $Bi_4Ge_3O_{12}$ (BGO) has often been selected but unfortunately BGO is not ideal as the light output is relatively low and the light decay constant is relatively long. An alternative crystal is Lutetium

Orthosilicate $Lu_2SiO_5(Ce)$ (LSO) because it is fast, dense and has a high light output, although the cost is quite high and supply is limited. Cerium doped $Lu_18YO_2SiO_5$ (Ce) (LYSO)has similar characteristics to LSO.

In the present embodiment, LSO or LYSO is preferably used, but other scintillation crystals such as BGO can be used. Indeed, as will be apparent hereinafter, the crystal used is selected according to the application to which the detector module is put.

The light sensitive substrate 2 of this embodiment is an avalanche photodiode (APD). The avalanche photodiode is compact, light and relatively easy and cheap to manufacture. They are also efficient at converting incident scintillation light from the scintillation crystal into electrical charge. Due to the relatively low electrical output signal and the limited active surface area, prior art usage of APD's has resulted in a low count rate, low sensitivity and increased electronic complexity compared to a detector using photomultiplier technology. Such problems have been overcome by the present invention.

The present invention has developed a detector module 10 in which a plurality of detection layers 3, as shown in figure 1, are assembled to form a multi-layered or stacked structure as shown in figure 2.

Referring more particularly to figure 2, the detector module 10 is shown for detecting gamma rays having an energy of 511keV. The module comprises four detection layers 3A, 3B, 3C and 3D, each having their respective scintillation crystals 1A, 1B, 1C, 1D and light sensitive substrates (APD's) 2A, 2B, 2C, 2D. as shown in figure 1. It will be appreciated that crystal 1A faces the ionizing radiation. The scintillation crystals are, as shown, individual slab-like or "continuous" detector crystals of equal thickness Z, each capable of receiving radiation emergent from a body (not shown) along several paths. Each APD is connected to a respective segment of an electronics circuit board (not shown) which may or may not be shielded from the ionising radiation.

It has been found that the thickness of the crystal for the module is a relevant parameter for its function whilst the total surface area of the crystal is selected to a large extent on the particular scanner that the detector module is being used in.

It is considered that the light (or UV) photons that result after a gamma ray interaction in a scintillation crystal will travel in random directions until they either strike the side of the crystal or are absorbed by the crystal. Upon striking the crystal they can either be reflected back into the crystal or pass into the adjoining medium. The chances that a particular photon will pass through or be reflected depend to a large extent on the surface finish and the coating of the crystal. Scintillation crystals typically have a highly reflective coating to maximise the number of photons that reach the detector face. Two types of reflection can occur, specular reflection where the angle of reflection is equal to the angle of incidence or diffuse reflection where the angle of reflection obeys a cosine rule with the maximum probability of reflection being at right angles to the face. The distance a scintillation photon travels in a particular type of crystal is characterised by the mean free path so the further a photon travels the higher the probability that it will be absorbed.

The implication of specular reflection is that the 'randomness' in the direction of the generated photon is maintained and the distribution of the reflected photons incident with the detection face will be unpredictable and can be considered as noise when calculating the position of the interaction.

With diffuse reflection, where the highest probability will be that the photons will be reflected at right angle to the plane of incidence, then the 'randomness' of the photon tracks is reduced and distribution of reflected photons is more predictable.

With the present invention, it has been found that with a thin crystal, there is a high probability that the reflected photons will have been reflected from the face opposite the detection face rather than from the sides. If this face is a diffuse reflector then any photons hitting the face will tend to be reflected directly to the detection face. Consequently, it is preferable that Z << XY. It has been found that by having the Z dimension less than the X and Y dimensions, the gamma ray interaction position can be measured without pixellating the crystal. This has significant advantages outlined below.

It has also been found with the present invention that the number of layers in the multi-layer detector module should be carefully selected. In one case, the thickness of the optimised single detection layer can be multiplied up to give the required detector stopping power based on the gamma ray attenuation characteristics of the crystal. For example, 10mm of LSO will stop about 60% of photons at 511keV. To mimic this with layers of 2.5mm, then 4 layers could be used as shown in figure 2.

The number of photon events in a particular crystal is given by:

$$N = N_0(1 - e^{\mu Z})$$

where

N - number of interactions

$N_0$ -    number of photons that enter the crystal
$\mu$ -    attenuation coefficient for the crystal at 511keV
$Z$ -    layer thickness

It will be seen that this is an exponential law. Accordingly, there are likely to be many more interactions in the first detection layer compared to the second detection layer and more interactions in the second detection layer compared to the third and so on. Thus, the count rate ) performance of the detector module would be limited by the performance of the first detection layer.

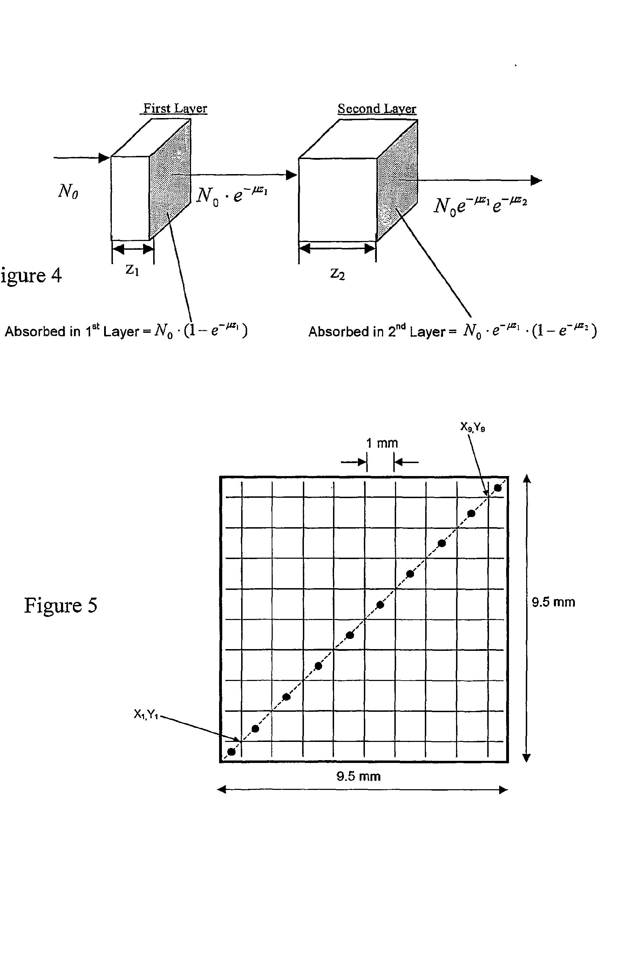

Consequently, in a second embodiment of the present invention shown in figure 3, the thickness of the scintillation crystals are adjusted so that a gamma ray entering the front face of the detector module will have an equal probability of interacting with each of the detection layers. For this to occur the first detection layer is made thin with progressively thicker layers towards the back end of the detector. Figure 4 depicts a two-layer device and shows expressions for calculating the number interactions in the two layers given a photon flux $N_0$ entering the front of the module, assuming no attenuation in the space between the crystals.

To achieve equal event occurrence in the first and second layers the two expressions are equated to find thickness ($z_2$) in terms of thickness ($z_1$):-

$$Z_2 = \frac{-\ln\left(2 - e^{\mu z_1}\right)}{\mu}$$

If more than two layers are required then this process can be repeated using an iterative procedure in a computer with the input parameters to the software being the required stopping power of the detector, the attenuation characteristics and the maximum layer thickness for the back layer. For position sensitive designs the thickness of the final layer will be constrained to maintain spatial resolution and to give an acceptable depth of interaction error.

Known APD arrays are available in preset sizes. Accordingly, for the purposes of the present embodiment, only half of a known 4 x 8 (32 element) APD array was used. This array has an element size of 1.6 x 1.6 mm and an element pitch of 2.3 mm. The elements have a spectral response of 320 to 1999 nm and a gain of 50 @ 350 V.

In order to decode the position of a gamma interaction in large unpixelated crystals, Anger logic can be used. The technique relies on photons that have not been reflected to localize the position of interaction. With large crystals, i.e. those with dimensions approaching the mean free path of the scintillation photons, reflections are much reduced. With a position sensitive multilayer detector the dimensions of the crystal will typically be only a small fraction of the mean free path of the scintillation light. As a result, a large proportion of the detected photons will have undergone one or more reflections. The number of photons that hit the detection face without having been reflected (direct photons) will depend on the solid angle made between the interaction location and the detection face. The number of direct photons is a maximum when the interaction takes place close to the detection face. As the crystal gets thicker the probability of interactions occurring close to the detection face is much reduced. If the crystal becomes long and thin then almost all the photons that reach the detection face will have been reflected. Anger logic relies on the direct photons so if there are a significant proportion of reflected photons then the positional accuracy of the method will be reduced. It is now known that Anger logic becomes inaccurate in crystals only a few mm thick.

The Anger logic method to calculate the interaction point in a crystal is summarized by the two equations below:

$$X = \frac{\sum_{i=1}^{i=16} x_i N_i}{\sum_{i=1}^{i=16} N_i} \qquad\qquad Y = \frac{\sum_{i=1}^{i=16} y_i N_i}{\sum_{i=1}^{i=16} N_i}$$

where- *X, Y* calculated position.
*N* number of counts in pixel i.
$x_i$ and $y_i$ are weighting factors given by the *XY* coordinates of the centre points of each pixel w.r.t. the centre array
*i* is the index 1 to 16 for 16 pixels

The method calculates the interaction position based on the relative number of photons detected in the 16 pixels. Each of the pixels are given x and y weighting factors based on the distance from a fixed origin.

An alternative technique is statistical based positioning (SBP) recently been reported by Joung et al.. 2002. This involves a calibration process that measures the light distribution at a particular point in the crystal. As the distribution is subject to statistical variation, each point is measured many times so a mean distribution is built up. This process is repeated for many points covering the crystal surface. The distributions are stored in a look up table. The measured light distribution from any particular interaction is compared with the distributions in the look up table and a search procedure initiated to find the best match in the lookup table. The interaction location is then assigned the location of the best match. The calibration stage involves measuring (or simulating) the light distribution is each of the array pixels (A1 to A16) for N interaction points distributed uniformly across the crystal. Each point is measured many times and the variation in the number of photons detected in each of the pixels is assumed to be Gaussian with a mean $\mu_{in}$ and standard deviation $\sigma_{in}$ (where i is the pixel number and n the interaction location). A calibration data set is formed for the N interaction locations containing the mean and standard deviation of the number of ligth photons detected in each of the pixels. In the present case, a simulation was conducted for a 9 x 9 grid of interaction locations spaced 1mm apart, as shown in figure 5. The interactions were constrained to occur at a depth of 50% of the crystal thickness and 100 interaction were simulated at each point.

The location of subsequent interactions is found by comparing the counts in A1 to A16 to the calibration data set. The most likely interaction location is determined by calculating the probability that the observed data (A1 to A16) occured at each of the calibration locations and picking the location with the highest probability. This is achieved by minimizing the following expression (Joung et al 2001):-

$$E_n = \sum_{i=1}^{16} \frac{(A_i - m_{in})^2}{2s_{in}^2}$$

where n is the calibrated interaction location and i the pixel number. The interaction location is assigned to $(X_n, Y_n)$ where $E_n$ is minimum

Simulations have shown that as the crystal thickness increases, the mean positional error increases. However, the mean errors for the SBP algorithm are more uniform and generally lower than the Anger logic.

Using the SBP technique, it was possible to use simulations to evaluate the maximum crystal thickness. Crystals of 2 mm to 8 mm thick were simulated and interaction locations at 10 points were produced and at depths of 20%, 50% and 80% crystal thickness at each point. Again 100 interactions were simulated at each point and at each depth. An equivalent RMS noise level of 200 light photons per APD pixel was included.

It has been found that using thicker crystals reduces the positional accuracy, interactions that take place close to the crystal detector interface show the least positional error, and larger positional errors occur at the edge of the crystal. The simulations show that a limit for scintillator or crystal layer thickness was around 4mm.

Further simulations were run to investigate the effect of increasing the reflectivity of the sides from 0.8 diffuse to 0.94 diffuse. The reflectivity of the front face remained 0.97 diffuse. The simulation described in the previous sections were re-run for 2mm and 4mm crystals and showed that the effect of increasing the side reflectivity increased the mean errors and the variance of the errors. For this reason a side reflectivity of 0.8 diffuse was selected.

Varying the thickness of the layers is intended to ensure that there is an equal probability of a scintillation event occurring in each of the layers. Software was developed to calculate the number of layers and their thickness given the previously calculated maximum permissible layer thickness and the overall stopping power required. As an example, setting a 65% stopping power at 511keV and maximum layer thickness of 4mm gave the following calculated layer thickness for a 5 layer device:-

Table 1

| Layer | Thickness (mm) |
|-------|----------------|
| 1 | 3.59 |
| 2 | 2.74 |
| 3 | 2.21 |
| 4 | 1.86 |
| 5 | 1.61 |

If the number of layers is limited to 4, then the following values are produced:-

Table 2

| Layer | Thickness (mm) |
| --- | --- |
| 1 | 4.3 |
| 2 | 3.1 |
| 3 | 2.5 |
| 4 | 2 |

By using a multi-layer approach, it has been found that it is possible to obtain improved light collection efficiency because using a thin crystal results in gamma ray interactions always taking place close to the light sensitive substrate. The solid angle made between the window thereof and the interaction site is maximized. The number of reflections and the average path length a photon travels will be reduced. The surface area of the crystal window can therefore be a significant proportion of the total surface area of the crystal greatly improving light collection efficiency compared to conventional detectors.

In addition, there is a reduced dependency on having to have a hard crystal to achieve good stopping power. With a layered structure, a high-density scintillation crystal is no longer necessary as the module stopping power can be increased by using additional layers of crystal without any loss of resolution. This flexibility allows a greater range of scintillation crystals to be considered for the present invention.

With the present invention, gamma ray interactions are most likely to occur in only one layer of the detector at any one time leaving the remainder of the detector active and ready to detect other events. This enables a significant decrease in detector dead-time and an increase in the overall count rate performance.

The multilayer module can use thin (short) crystals, this means that the solid angle made between the interaction site and the crystal window will be significant and will show limited variation. A large proportion of the scintillation photons will hit the window directly without reflection. Also reduced crystal length will lead to reduced self absorption. The implication is that with thin crystals it is no longer necessary to pixellate to localize the interaction site, and the surface finish of the crystal sides is not as critical as a single layer design. It is therefore much easier and cheaper to manufacture appropriate crystals compared to those used in other detectors.

A multi-layer module will also have an inherent depth of interaction capability. The depth resolution of the multilayer detector will depend on the thickness of the crystal layers. Moreover, since APDs are not affected by magnetic fields and do not require shielding, the present detector module enables easier design and development of combined MRI and PET scanners.

It should also be noted that the maximum count rate of a multilayer detector is potentially greater by a factor of the number of layers compared to a single layer detector with the same overall stopping power. This maximum count rate advantage can only be realized if the front layers of the detector are made thin compared to the back layers to compensate for attenuation.

An overall PET scanner or other system will, of course, comprise many modules such as hundreds or thousands, each module handling a radiation emergent along a respective group of paths from a subject under examination. In some cases, neighboring groups of paths may be contrived to overlap at their edges to facilitate any inter-detector calibration that may be required to compensate for spatial and/or temporal changes in detector performance.

In alternative embodiments, the semiconductive devices may be disposed upon, or at least in optical communication with, any of the other sides of the scintillation devices with which they are associated. Positioning semiconductive devices on more than one side of the crystal could help to maximize the amount of collected light and help in the determination of the interaction position. The drawback would be increased complexity of the electronics.

All or any of the APD layers may be sectioned to provide, in effect, a multiple APD capable of providing positional information as to events within the scintillator with which it is associated.

It will be appreciated that the use of scintillators which are slab-like or "continuous" (i.e. non-segmented with regard to their radiation-receiving surfaces) and segmented in depth with a the depth dimension Z being the shortest of the three primary dimensions, the present invention differs from the prior art in which the depth dimension is usually significantly the largest dimension.

The number of layers utilized in the detector module depends, at least in part, upon the particular application for which the scanner is intended. Factors that typically influence the number of layers used in a given situation include cost, the sheer volume of individual crystals needed; the stopping efficiency, and the depth of interaction resolution (the accuracy of the depth of interaction measurement depending, to a large extent, on the thickness of the scintillators), the use of thinner layers implying increased resolution as to the depth of interaction parameter.

In dependence upon the performance required of the scanner as a whole, and the purpose for which its use is intended, differing degrees of sophistication may be introduced into the construction of the individual detector modules. For example, the successive scintillators in any or all the detector modules may be fabricated from differing scintillator materials. In such an event, the materials may be intrinsically different (comprising for example different crystalline materials) and/or they may be variously doped or implanted with, or otherwise caused to accommodate other materials.

In order to utilize the detector modules of the present invention, associated electronic circuitry has been developed. For example, small customized application specific chips (ASICs) could be mounted to the side of the detector module to connect to the APD of each detection layer. It will therefore be realized that individual layers of a detector module can be designed to achieve optimal spatial location of detected events and depth of interaction (DOI). The absolute number of layers used, and the actual thicknesses of the various layers in the module are determined according to the operating parameters and performance criteria for any particular scanner requirement.

Examples of applications for the detector modules in accordance with any of the aspects of this invention are: -

(A) Combined PET and X-ray Computer Tomography imaging.

In this connection it is pertinent to note that, whilst PET produces useful images relating to biological or physiological functionality of the subject under examination, it is not particularly suitable, by itself, for imaging anatomical structures. In contrast, X-ray Computer Tomography (X-ray CT) systems can provide high resolution anatomical images of the human body but with little or no functional information.

In recent years there has been much development work to combine PET with X-ray CT; the PET system producing a functional image that can be overlaid on the anatomical image produced by the X-ray CT.

While both systems rely on ionizing radiation to penetrate through the body of the subject under examination, their respective modes of operation, and importantly their detector requirements, differ considerably. Thus, whilst PET is a tracer technique that relies on detecting pairs of gamma photons after their emission from within the body, X-ray CT uses an external source of X-rays which penetrate through the body and are detected as they emerge therefrom along many individual paths. The X-ray detectors utilized in CT thus measure X-ray flux received along the various paths, rather than individual photons as in the PET case. The X-ray energy is also much lower, at around 150 KeV and below.

To date, the combined systems have been built by essentially "bolting together" existing PET and x-ray CT scanners, as a result of which the active (i.e. examined) regions of the subject investigated by the two scanners are some centimeters apart, requiring the subject to be moved if the two scanners are to investigate a coincident region of the subject. Also, by virtue of the fact that two complete and separate systems are used, the associated cost is high.

Use of a multilayered detector module of the present invention permits the development of a combined PET/CT detector sensitive to both X-rays and annihilation photons. Such a scanner is in principle similar to that already described with reference to Figure 2, but wherein the first layer 3A, comprising scintillator 1A and semiconductive substrate 2A and supporting electronics is optimized to detect x-rays. As the X-ray energy is, as previously mentioned, relatively low compared to the 511KeV used in PET, this first layer is made relatively thin or of material which subjects the positron annihilation to minimal attenuation.

A combined PET/CT system using such a detector has a number of advantages over the "bolted together" composite systems currently available. Notably, PET and CT examinations can be conducted simultaneously with the subject in a single position. The size and complexity of the scanner is considerably reduced, leading to significantly lower build costs.

(B) Combined PET and SPECT.

Combined PET and single photon computed emission tomography (SPECT) systems based on gamma camera technology have recently been developed; such systems being designed to operate either in SPECT mode, with single photon tracers, or in PET mode with positron tracers. There are however difficulties associated' with such systems, due to the compromises that have to be made in their design. A system that can perform both PET and SPECT may thus not perform either task as well as dedicated systems. A multilayered detector module, utilizing a first layer designed to detect the (lower energy) photons of a SPECT examination and the succeeding layer or layers designed to detect annihilation photons thus presents significant advantage.

Thus, design compromises do not have to be made and the multilayered detector modules of the combined system can usefully be separately optimized for both SPECT and PET.

(C) Alpha, beta and gamma detector.

Many different types of ionizing radiation detectors and monitors exist; each type being usually designed for a particular type and energy of radiation. Using a multilayer detector module of the present invention permits the development of a more flexible detector having the ability to measure different types of ionizing radiation exhibiting a wide energy range.

For example, a first scintillation material of the first detector layer can be selected to be sensitive to Alpha particles and low-to-intermediate energy Beta particles. The scintillator of the next detection layer can be constructed from a low-density organic plastic scintillator optimized to detect higher energy Beta particles that penetrate the first layer, as well as low energy gamma rays. The scintillator of a final detector layer can be fabricated from a harder inorganic scintillator designed to detect higher energy gamma rays.

(D) Other scanners.

There is also a class of potential applications in which a PET, CT or SPECT scanner is combined or incorporated into a scanning system, such as MRI, that does not, of itself, use ionizing radiation. Clearly all of the attributes mentioned herein as being applicable to ionizing radiation detectors can be advantageously employed in such hybrid systems.

Turning now to the electronics of the present invention, a block diagram for the electronics for each layer is shown in Figure 6. Each APD pixel has its own charge sensitive amplifier (CSA), shaping amplifier and sample-and-hold circuit. The signals at the output of the sixteen CSAs are summed to produce the input for a constant fraction discriminator (CFD). The output of the CFD is a logic pulse that is triggered when the amplitude of the analogue input pulse is greater than a reference level pre-set in the CFD. The output of the CFD is used to trigger the sample-and-hold circuits into hold mode to store the pulse amplitudes at the output of the sixteen shaping amplifiers. Additionally the CFD output is fed into control logic, which generates a signal that is fed back to the CFD to inhibit any further operation. The control logic also generates interface signals to inform the controlling computer that data is ready to be transferred from the layer electronics. During the data transfer cycle, the controlling computer addresses each of the S/H circuits in turn using a 16-to-1 analogue multiplexer. Each signal is presented to an analogue to digital converter (ADC) in the controlling computer. Once all sixteen channels have been read in, the computer sends a signal to the control logic to release the inhibit on the CFD. The CFD output can also be used for coincidence timing. In production, and/or for apparatus targeting specific requirements, custom designed integrated circuits will be employed. The prototype device, however, utilizes standard "off the shelf" components.

Figure 7 shows, schematically, how the four layers of the prototype system are connected to the computer. Six address lines, which are common to all the detector layers, are sufficient to select any APD pixel on any of the layers. An acquisition cycle is initiated when the controlling computer detects a data_ready line is activated. A data_ready signal can be generated by any of the four layers. Each layer is then interrogated using a data_stat line to see which one has data available. A data acquisition cycle is then initiated. When data acquisition is complete, an inhibit_clear line is activated to reset the layer.

With the prototype system, the number of events that can be processed per second is quite limited, due in part to the sequential readout of the sixteen signals and also the time taken to process the analogue signals in the computer. To realize the full advantages of the multilayer detector principle, the system events should be processed much faster, and an improved system would have each detector layer having its own "on board" ADC conversion, memory and timer. Each time a valid event occurs in one of the layers, position energy and timing information is stored in the "on board" memory. When the memory is full its contents are transferred to the computer via a standard fast serial interface. The timers on the detectors are synchronized using a master clock signal generated by a stable signal source.

It will be apparent that the present invention is capable of considerable modification, the detailed embodiments of which will be readily apparent to those skilled in the art.

**Claims**

1. A detector module (10) for detecting ionizing radiation emergent from an object of interest, the module comprising:-
   a plurality of stacked detection layers (3A-3D); wherein each layer includes a scintillator (1A-1D) capable of emitting electromagnetic radiation at optical, or near optical, wavelengths in response to interaction with said ionizing radiation, and a light sensitive solid state substrate element (2A-2D) capable of detecting the electromagnetic radiation emitted by the scintillator and of generating electrical signals indicative thereof, the detection layers (3A-3D) being stacked and arranged such that in use the front face of the top layer faces the object of interest from which said ionizing radiation is emergent, said radiation emerging in a direction which would pass through each of the stacked detection layers in turn, **characterised in that** the scintillators of the plurality of layers have a thickness selected to have substantially an equal probability of interaction with said ionizing radiation.

2. A module as claimed in claim 1 in which the scintillator of at least one detection layer comprises a continuous crystal.

3. A module as claimed in claim 1 or claim 2 having three or more detection layers.

4. A module as claimed in any one of claims 1 to 3 wherein the thickness of the scintillators becomes progressively larger with increasing distance from a front face of the module.

5. A module as claimed in claim 1 in which the scintillator of each said detection layer comprises a continuous crystal.

6. A module as claimed in any preceding claim wherein the scintillator of each detection layer has a thickness which is the smallest of the three primary dimensions.

7. A module as claimed in any preceding claim in which at least one detection layer includes a scintillator for detecting electrons or positrons.

8. A module as claimed in any preceding claim in which at least one detection layer includes a scintillator for detecting alpha particles.

9. A module as claimed in any preceding claim in which at least one detection layer includes a scintillator for detecting x-rays.

10. A module as claimed in any preceding claim in which the light sensitive solid state substrate element comprises a part of a larger solid state array for a plurality of detector modules.

11. A module as claimed in any preceding claim in which the light sensitive solid state substrate element includes avalanche photodiodes.

12. A computer tomography scanner including a plurality of detector modules as claimed in any preceding claim.

13. A computer tomography system including a scanner as claimed in claim 12.

14. A computer tomography scanner as claimed in claim 12 combined with a SPECT system.


**Patentansprüche**

1. Detektormodul (10) zur Erfassung von ionisierender Strahlung, die aus einem Untersuchungsobjekt austritt, wobei der Modul folgendes aufweist: eine Mehrzahl von in Stapeln angeordneten Detektctorschichten (3A - 3D), wobei jede Schicht einen Szintillator (1A - 1D) umfaßt, welcher elektromagnetische Strahlung bei optischen oder nahezu optischen Wellenlängen in Abhängigkeit von der Interaktion mit der ionisierenden Strahlung emittieren kann, und ein lichtempfindliches Festkörpersubstratelement (2A - 2D), welches die von den Szintillator abgegebene elektromagnetische Strahlung erfassen und diese wiedergebende elektrische Signale erzeugen kann, wobei die Detektorschichten (3A-3D) im Stapel derart angeordnet sind, dass im Gebrauchszustand die Vorderfläche der obersten Schicht dem Untersuchungsobjekt zugewandt liegt, von dem die ionisierende Strahlung austritt, und wobei die Strahlung in einer Richtung austritt, welche durch jede Detektorschicht des Stapels ihrerseits geht, **dadurch gekennzeichnet, dass** die Szintillatoren der Mehrzahl von Schichten eine Dicke haben, welche derart gewählt ist, dass sie eine im wesentlichen gleiche Interaktionswahrscheinlichkeit mit der ionisierenden Strahlung hat.

2. Modul nach Anspruch 1, bei dem der Szintillator wenigstens einer Detektorschicht einen kontinuierlichen Kristall aufweist.

3. Modul nach Anspruch 1 oder Anspruch 2, welcher drei oder mehr Detektorschichten hat.

4. Modul nach einem der Ansprüche 1 bis 3, bei dem die Dicke der Szintillatoren mit zunehmendem Abstand von einer Vorderfläche des Moduls progressiv größer wird.

5. Modul nach Anspruch 1, bei dem der Szintillator jeder Detektorschicht einen kontinuierlichen Kristall aufweist.

6. Modul nach einem der vorangehenden Ansprüche, bei dem der Szintillator jeder Detektorschicht eine Dicke hat, welche die kleinste von drei Hauptdimensionen ist.

7. Modul nach einem der vorangehenden Ansprüche, bei dem wenigstens eine Detektorschicht einen Szintillators zur Erfassung von Elektronen oder Positronen umfaßt.

**8.** Modul nach einem der vorangehenden Ansprüche, bei dem wenigstens eine der Detektiosschichten einen Szintillators für die Erfassung von Alphapartikeln umfaßt.

**9.** Modul nach einem der vorangehenden Ansprüche, bei dem wenigstens eine der Detektorschicht eines Szintillators für die Erfassung von Röntgenstrahlen umfaßt.

**10.** Modul nach einem der vorangehenden Ansprüche, bei dem das lichtempfindliche Festkörpersubstratelement einen Teil einer größeren Festkörperanordnung für eine Mehrzahl von Detektormodulen aufweist.

**11.** Modul nach einem der vorangehenden Ansprüche, bei dem das lichtempfindliche Festkörpersubstratelement Avalanche-Photodioden umfaßt.

**12.** Computertomographischer Scanner, welcher eine Mehrzahl von Detektormodulen gemäß einem der vorangehenden Ansprüche umfaßt.

**13.** Computertomographisches System, welches einen Scanner nach Anspruch 12 umfaßt.

**14.** Computertomographischer Scanner nach Anspruch 12 in Kombination mit einem SPECT-System.

**Revendications**

**1.** Un module formant détecteur (10) pour la détection d'un rayonnement ionisant irradiant depuis un objet d'intérêt, le module comprenant : - une pluralité de couches de détection empilées (3A-30) ; chaque couche comprend un scintillateur (1A-10) capable d'émettre un rayonnement électromagnétique au niveau à des longueurs d'onde optiques, ou proches de l'optique, en réponse à une interaction avec ledit rayonnement ionisant, et un élément formant substrat (2A-2D) semi-conducteur sensible à la lumière capable de détecter le rayonnement électromagnétique émis par le scintillateur et de générer des signaux électriques indicatifs de celui-ci, les couches de détection (3A-3D) étant empilées et disposées de telle sorte qu'en utilisation la face frontale de la couche supérieure soit tournée face à l'objet d'intérêt duquel irradie ledit rayonnement ionisant, ledit rayonnement irradiant dans une direction propre à traverser successivement chacune des couches de détecteurs empilées, **caractérisé en ce que** les scintillateurs d'une pluralité de couches ont une épaisseur choisie pour avoir sensiblement une probabilité égale d'interaction avec ledit rayonnement ionisant.

**2.** Un module tel que revendiqué à la revendication 1 dans lequel le scintillateur d'au moins une couche de détection comprend un cristal continu.

**3.** Un module tel que revendiqué dans la revendication 1 ou la revendication 2 ayant trois couches de détection ou plus.

**4.** Un module tel que revendiqué dans l'une quelconque des revendication 1 à 3 dans lequel l'épaisseur des scintillateurs devient progressivement plus importante au fur et à mesure de l'augmentation de la distance à partir de la face frontale du module.

**5.** Un module tel que revendiqué dans la revendication 1 dans lequel le scintillateur de chacune desdites couches de détection comprend un cristal continu.

**6.** Un module tel que revendiqué dans l'une quelconque des revendications précédentes dans lequel le scintillateur de chaque couche de détection a une épaisseur qui est la plus petite des trois dimensions principales.

**7.** Un module tel que revendiqué dans l'une quelconque des revendications précédentes dans lequel au moins une couche de détection comprend un scintillateur pour détecter des électrons ou des positrons.

**8.** Un module tel que revendiqué dans l'une quelconque des revendications précédentes dans lequel au moins une couche de détection inclut un scintillateur pour détecter des particules alpha.

**9.** Un module tel que revendiqué dans l'une quelconque des revendications précédentes dans lequel au moins une couche de détection inclut un scintillateur pour détecter des rayons X.

**10.** Un module tel que revendiqué dans l'une quelconque des revendications précédentes dans lequel l'élément formant substrat semi-conducteur sensible à la lumière comprend une partie d'une matrice à semiconducteurs plus large pour une pluralité de modules formant détecteur.

**11.** Un module tel que revendiqué dans l'une quelconque des revendications précédentes dans lequel l'élément formant substrat à semiconducteurs sensible à la lumière comprend des photodiodes à avalanche.

**12.** Un appareil de balayage dans la tomographie assistée par ordinateur comprenant une pluralité de modules formant détecteur tel que revendiqués dans l'une quelconque des revendications précédentes.

**13.** Un système de tomographie assistée par ordinateur comprenant un appareil de balayage selon la revendication 12.

**14.** Un ordinateur scanner de tomographie selon la revendication 12 a combiné avec un système de gammatomographie (SPECT system).

comprend un scintillateur pour détecter des électrons ou des positrons.

8 Un module tel que revendiqué dans l'une quelconque des revendications précédentes dans lequel au moins une couche de détection inclut un scintillateur pour détecter des particules alpha.

9 Un module tel que revendiqué dans l'une quelconque des revendications précédentes dans lequel au moins une couche de détection inclut un scintillateur pour détecter des rayons X.

10 Un module tel que revendiqué dans l'une quelconque des revendications précédentes dans lequel l'élément formant substrat semi-conducteur sensible à la lumière comprend une partie d'une matrice à semiconducteurs plus large pour une pluralité de modules formant détecteur.

11 Un module tel que revendiqué dans l'une quelconque des revendications précédentes dans lequel l'élément formant substrat à semiconducteurs sensible à la lumière comprend des photodiodes à avalanche.

12 Un appareil de balayage dans la tomographie assistée par ordinateur comprenant une pluralité de modules formant détecteur tel que revendiqués dans l'une quelconque des revendications précédentes.

13 Un système de tomographie assistée par ordinateur comprenant un appareil de balayage selon la revendication 12.

14 Un ordinateur scanner de tomographie selon la revendication 12 a combiné avec un système de gammatomographie (SPECT system).

Figure 1

Back

Front

igure 4

Absorbed in 1st Layer $= N_0 \cdot (1 - e^{-\mu z_1})$      Absorbed in 2nd Layer $= N_0 \cdot e^{-\mu z_1} \cdot (1 - e^{-\mu z_2})$

Figure 5